# EUROPÄISCHE PATENTSCHRIFT

(11) **EP 0 587 643 B1**
(45) Veröffentlichungstag und Bekanntmachung des Hinweises auf die Patenterteilung: **19.07.1995**
(21) Anmeldenummer: 92911156.5
(22) Anmeldetag: 29.05.1992
(51) Int. Cl.: G11B 15/473, G11B 15/14, H02K 29/10

(54) **KOPFTROMMEL FÜR EINEN RECORDER**
HEAD DRUM FOR A RECORDER
TAMBOUR A TETES POUR ENREGISTREUR

(30) Priorität: 06.06.1991 DE 4118535
(43) Veröffentlichungstag der Anmeldung: 23.03.1994
(73) Patentinhaber: DEUTSCHE THOMSON-BRANDT GMBH, 78048 Villingen-Schwenningen (DE)
(72) Erfinder: UHDE, Dietmar, D-78126 Königsfeld (DE); LEHMANN, Rüdiger, D-78112 St. Georgen (DE); GLEIM, Günter, D-78052 Villingen-Schwenningen (DE); HOCH, Peter, D-78098 Triberg (DE); SCHANDL, Hartmut, A-1110 Wien (AT)
(86) Internationale Anmeldenummer: EP9201192
(87) Internationale Veröffentlichungsnummer: WO9222059

(56) Entgegenhaltungen:
- EP-A- 0 233 540
- DE-C- 3 403 150
- GB-A- 1 546 386
- US-A- 3 569 804

## Beschreibung

Die Erfindung geht aus von einer Kopftrommel für einen Recorder gemäß dem Oberbegriff des Anspruchs 1. Eine derartige Kopftrommel ist bekannt durch die DE-OS 36 04 238.

Eine derartige Kopftrommel enthält einen Markierungsring in Form eines topf- oder napfförmiges Teils aus Plexiglas, auf dessen umlaufenden Rand Markierungen in Form mehr oder weniger breiter schwarzer Streifen aufgedruckt sind. Durch optoelektronische Abtastung dieser Streifen werden kurze Impulse relativ hoher Frequenz und längere Impulse geringerer Frequenz erzeugt. Derartige Impuls dienen zur Regelung der Drehzahl der Kopftrommel, zur Erzeugung von Kopfumschaltimpulsen und zur elektronischen Kommutierung eines bürstenlosen Gleichstrommotors.

Bei einer derartigen Kopftrommel müssen die Markierungen in einem zusätzlichen Arbeitsvorgang auf das zylinderförmige Plexiglasteil aufgedruckt werden. Außerdem tritt ein sogenannter Noisy-Effekt auf, der folgendes bedeutet: Auf den Plexiglasbereichen zwischen den schwarzen Marken, die die lichtdurchlässigen Bereiche bilden, kann es zu Staubablagerungen kommen. Diese Staubablagerungen beeinflussen das bei der Abtastung durchdringende Licht und erzeugen in dem erzeugten Impulssignal ein Rauschen, das zu Fehlfunktionen führen kann.

Der Erfindung liegt die Aufgabe zugrunde, für die Realisierung der Marken die Herstellung zu vereinfachen, die Kosten des Markierungsringes zu verringern und den genannten Noisy-Effekt weitestgehend auszuschalten.

Diese Aufgabe wird durch die im Anspruch 1 angegebene Erfindung gelöst. Vorteilhafte Weiterbildungen der Erfindung sind in den Unteransprüchen angegeben.

Die Erfindung besteht somit darin, daß die Markierstreifen durch von dem Rand ausgehende, lichtundurchlässige Stege unterschiedlicher Breite gebildet sind, die zwischen sich fensterförmige Öffnungen bilden und an ihren dem Rand abgewandten Enden über einen umlaufenden Ring miteinander verbunden sind.

Die lichtdurchlässigen Bereiche des bekannten Plexiglasringes werden somit durch offene Fenster ersetzt. Dadurch, daß in diesen Bereichen somit kein Material mehr vorhanden ist, wird die Ansammlung von Staub mit Sicherheit vermieden und dadurch der genannte Noisy-Effekt ausgeschaltet. Die gedruckten schwarzen Streifen bei dem bekannten Plexiglasring werden durch die lichtundurchlässigen Materialstege ersetzt. Dadurch wird der Arbeitsvorgang für das Aufdrucken von schwarzen Streifen eingespart. Da sowohl die aus schwarzen Kunststoff bestehenden Stege als auch die dazwischen liegenden fensterförmigen Öffnungen sich praktisch nicht ändern, wird ein Alterungsprozeß, der die Qualität der optischen Abtastung verringern kann, ausgeschlossen. Durch die absolute Lichtundurchlässigkeit der Stege und die absolute, sich nicht ändernde Lichtdurchlässigkeit der fensterförmigen Öffnungen wird eine große Hell/Dunkel-Dynamik erreicht, die ebenfalls keiner Alterung unterliegt.

Der Ring, der die Enden der schmalen und breiten Stege miteinander verbindet, hat eine besondere Bedeutung. Wenn die von dem Rand ausgehenden, parallel zur Achse weisenden Stege frei enden, kann es insbesondere bei den schmalen Stegen zu einem Verbiegen oder Verziehen durch Temperatureinflüsse oder Alterung kommen. Da die Impulse aus diesen Stegen abgeleitet werden, würden Zeitfehler in der Lage der Impulse anstehen. Auch besteht die Gefahr, daß einzelne Stege wegen ihrer geringen Breite abbrechen. Durch den Ring, der die an sich freien Enden der Stege miteinander verbindet, wird eine große Stabilität auch für die schmalen Stege gewährleistet. Ein Verziehen der Stege in Radialrichtung oder Umfangrichtung wird dadurch vermieden. Erst durch die Kombination der lichtundurchlässigen Stege, der allseitig geschlossenen, lichtdurchlässigen fensterförmigen Öffnungen und des die Stege verbindenden Ringes wird ein Markierring geschaffen, der die obengenannten Vorteile aufweist und alle Anforderungen insbesondere hinsichtlich Stabilität und Genauigkeit der erzeugten Impulse erfüllt.

Die Erfindung wird im folgenden anhand der Zeichnung an einem Ausführungsbeispiel erläutert. Darin zeigen
- Fig. 1: einen Markierring einer bekannten Kopftrommel,
- Fig. 2: einen erfindungsgemäß ausgebildeten Markierring in Perspektive und
- Fig. 3: im Prinzip einen Schnitt durch den Ring gemäß Fig. 2.

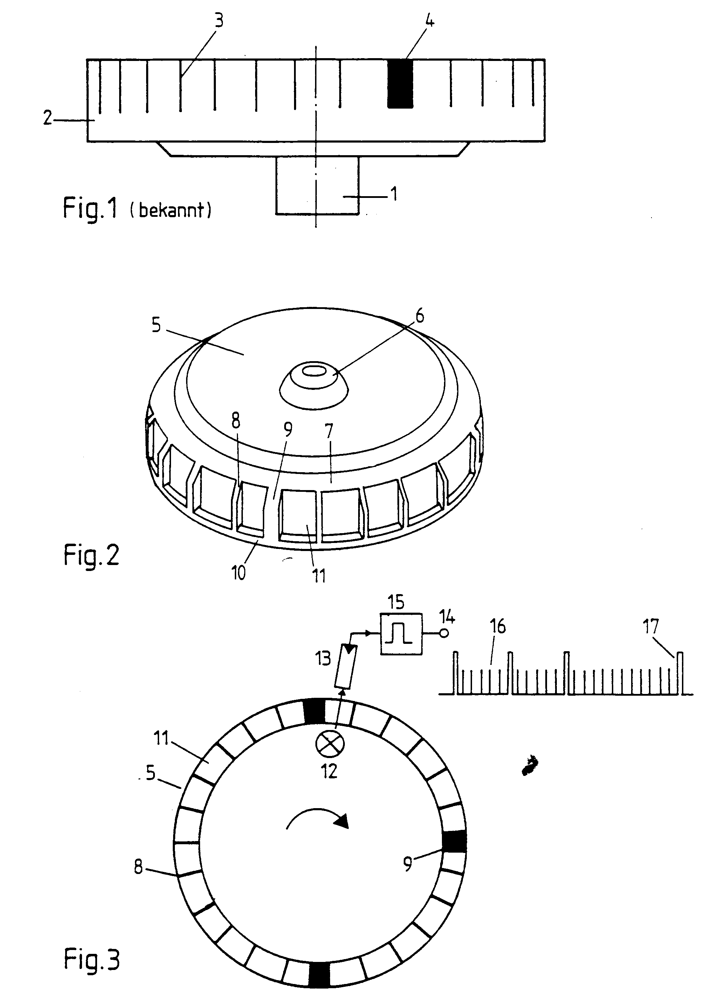

In Fig. 1 ist an dem rotierenden Teil 1 einer Kopftrommel das topfförmig ausgebildete rotierende Teil 2 aus Plexiglas befestigt. Am äußeren Umfang des Teils 2 sind Marken in Form schmaler schwarzer Striche 3 und Marken in Form breiterer schwarzer Striche 4 aufgedruckt. Durch optoelektronische Abtastung dieser Marken werden durch die Striche 3 kurze Impulse relativ hoher Frequenz und durch die Striche 4 längere Impulse geringerer Frequenz erzeugt.

Fig. 2 zeigt ein topf- oder napfförmiges rotierendes Teil 5, das in seiner Funktion etwa dem Teil 2 in Fig.1 entspricht. Das Teil 5 besteht jedoch nicht aus Plexiglas, sondern aus einem lichtundurchlässigen schwarzen Kunststoff. Das Teil 5 ist über die Nabe 6 an der rotierenden Welle der Kopftrommel befestigt. Der äußere umlaufende Rand des Teiles 5 enthält einen durchlaufenden, lichtundurchlässigen Steg 7. Vom dem Steg 7 erstrecken sich eine Vielzahl von Stegen 8 relativ geringer Breite von ca 0,5 mm und einige Stege 9 größerer Breite von ca 3 mm. Alle Stege 8, 9 enden in dem ebenfalls umlaufenden Ring 10. Der umlaufende Steg 7, die schmalen Stege 8, die breiten Stege 9 sowie der umlaufende Ring 10 bilden zwischen sich eine Vielzahl fensterartiger Öffnungen 11, durch die der Lichstrahl einer Lichtschranke ungehindert hindurchtreten kann.

Die schmalen Stege 8 entsprechen in ihrer Funktion den schmalen Strichen 3 in Fig. 1. Der Vorteil besteht aber darin, daß die durch die Stege 8 gebildeten Marken nicht aufgedruckt werden müssen, sondern durch das einteilige Kunststoffspritzteil gemäß Fig. 2 selbst gebildet sind. Die breiten Stege 9 haben die Funktion der breiten Striche 4 in Fig. 1. Die fensterartigen Öffnungen 11 entsprechen den lichtdurchlässigen Abschnitten zwischen den Strichen 3, 4 in Fig. 1. Vorteilhaft ist jedoch, daß in diesen Bereichen im Gegensatz zu Fig. 1 kein Material vorhanden ist und somit auch Staubablagerungen in diesen Bereichen nicht auftreten können. Der umlaufende Ring 10, in dem die Stege 8, 9 enden und der somit die Enden dieser Stege miteinander verbindet, gewährleistet die beschriebene notwendige Stabilität insbesondere für die schmalen Stege 8.

Figur 3 zeigt im Prinzip die Wirkungsweise des Teiles 5 in Fig. 2 in einem Schnitt in der Höhe der Öffnungen 11. Es sind drei breite Stege 9 bei den Drehwinkeln 0°, 90°, 180° vorgesehen. Diese Lösung ist vorteilhaft, da nur durch eine derartige unsymmetrische Anordnung die jeweilige Lage des Teils 5 und damit des rotierenden Teils der Kopftrommel detektiert werden kann. Bei zwei um 180° versetzten Stegen 9 wäre die Lage um 180° unbestimmt. Die Abtastung der durch die Stege 8, 9 gebildeten Marken erfolgt mit einer Lichtquelle 12 und einem Fotoelement 13. Durch die optoelektronische Abtastung der Stege 8, 9 wird am Ausgang 14 eines Impulsformers 15 eine Impulsfolge erzeugt. Diese enthält relativ kurze Impulse 16 hoher Frequenz, die durch die schmalen Stege 8 ausgelöst werden und vorzugsweise zur Regelung der Drehgeschwindigkeit der Kopftrommel dienen. Die Impulsfolge enthält außerdem relativ lange Impulse 17 geringerer Frequenz und größerer Amplitude, die durch die breiten Stege 9 erzeugt werden und vorzugsweise für eine Servoregelung oder zur Erzeugung von Schaltimpulsen für eine Kopfumschaltung dienen.

## Patentansprüche

1. Kopftrommel für einen Recorder mit einem rotierenden Trommelteil mit einem umlaufenden Rand mit einer Vielzahl von äquidistanten Markierstreifen geringer Breite und einer geringeren Zahl von dazwischen liegenden Markierstreifen größerer Breite zum Erzeugen von Impulsen für eine elektronische Motorkommutierung und/oder eine Servoregelung und/oder eine Kopfumschaltung, **dadurch gekennzeichnet,** daß die Markierstreifen durch von dem Rand (7) ausgehende, lichtundurchlässige Stege ( 8, 9) unterschiedlicher Breite gebildet sind, die zwischen sich fensterförmige Öffnungen (11) bilden und an ihren dem Rand (7) abgewandten Enden über einen umlaufenden Ring (10) miteinander verbunden sind.

2. Kopftrommel nach Anspruch 1, **dadurch gekennzeichnet,** daß drei Stege (9) mit je einem Drehwinkelabstand von 90° vorgesehen sind.

3. Kopftrommel nach Anspruch 1, **dadurch gekennzeichnet,** daß der rotierende Trommelteil (1) ein topf- oder napfförmiges Teil (5) aufweist, in dessen flachen, umlaufenden, mit seiner Ebene etwa parallel zur Rotationsachse weisenden Rand die Stege (8, 9) ausgebildet sind.

4. Kopftrommel nach Anspruch 4, **dadurch gekennzeichnet,** das das topf- oder napfförmige Teil (5) mit dem Rand (7), den Stegen (8, 9) und dem Ring (10) als ein einstückiges Kunststoff-Spritzteil hergestellt ist.

## Claims

1. A head cylinder for a recorder with a rotating cylinder part with a circumferential edge with a multiplicity of equidistant marker stripes of narrow width and a lesser number of marker stripes lying in between and of greater width for generating pulses for an electronic motor commutation and/or a servo regulation and/or a head change-over, **characterised in that** the marker stripes are formed by opaque fins (8, 9) of differing widths projecting from the edge (7) which form window-like openings (11) between them and the ends of which remote from the edge (7) are connected with each other by means of a circumferential ring (10).

2. A head cylinder according to claim 1, **characterised in that** three fins (9) are provided each spaced part by an angle of rotation of 90°.

3. A head cylinder according to claim 1, **characterised in that** the rotating cylinder part (1) has a pot- or cup-shaped part (5), in the flat, circumferential edge of which, the plane of which is roughly parallel to the axis of rotation, the fins (8, 9) are provided.

4. A head cylinder according to claim 4, **characterised in that** the pot- or cup-shaped part (5) with the edge (7), the fins (8, 9) and the ring (10) are formed as a one-piece plastic injection moulding.

## Revendications

1. Tambour porte-têtes pour magnétoscope, équipé d'une partie tournante qui comporte un bord périphérique avec un grand nombre de bandes de marquage équidistantes de faible largeur, entrecoupées d'un nombre moins important de bandes de marquage plus larges, destinées à la génération d'impulsions pour la commutation électronique du moteur et/ou la commande asservie et/ou le changement de tête, caractérisé en ce que les bandes de marquage sont constituées par des montants imperméables à la lumière 8, 9, de largeur différente, formant des ouvertures en forme de fenêtre 11, et reliés à leurs extrémités opposées au bord 7 par un anneau 10.

2. Tambour porte-têtes selon la revendication 1, caractérisé en ce que trois montants 9 sont prévus avec un angle de rotation de 90° chacun.

3. Tambour porte-têtes selon la revendication 1, caractérisé en ce que la partie tournante 1 du tambour comporte un élément rotatif 5 en forme de cuvette avec un bord périphérique plat, parallèle à l'axe de rotation, dans lequel se terminent les montants 8, 9.

4. Tambour porte-têtes selon la revendication 4, caractérisé en ce que l'élément 5 en forme de cuvette, le bord 7, les montants 8; 9 et l'anneau 10 forment une pièce monobloc en plastique moulée par injection.
